# DEMANDE DE BREVET EUROPEEN

(11) **EP 2 314 512 A1**
(43) Date de publication de la demande: **27.04.2011**
(21) Numéro de dépôt: 10306173.5
(22) Date de dépôt: 26.10.2010
(51) Int. Cl.: B65D 1/02, B65D 41/34

(54) **Corps de bouteille à collerette d'accrochage réduite**

(30) Priorité: 26.10.2009 FR 0957506
(71) Demandeur: Société d'Exploitation des Sources Roxane, 61420 La Ferrière Bochard (FR)
(72) Inventeur: Papillaud, Pierre, 61420, LA FERRIERE BOCHARD (FR)
(74) Mandataire: Bentz, Jean-Paul

(57) **Abrégé**

Est prévu un corps de bouteille (11',11'') comprenant un col (13'') présentant un pas de vis extérieur (23'') adapté pour recevoir extérieurement un bouchon (15',15'') et, vers sa base, une collerette d'accrochage (13a',13a1',13''), le diamètre extérieur du col en-dessous de la collerette d'accrochage étant inférieur à celui au-dessus, caractérisé en ce que le col (13'') présente intérieurement une première section (s1) (constante), au niveau du pas de vis extérieur, laquelle section, à l'endroit d'un rétrécissement (26'') situé sensiblement au niveau de la collerette d'accrochage, diminue jusqu'à une seconde section (s2), strictement inférieure à la première section.

## Description

L'invention concerne le domaine de l'embouteillage.

Plus particulièrement, les produits concernés sont un corps de bouteille en plastique, voire un tel corps équipé d'un bouchon de fermeture.

De tels corps de bouteille sont typiquement fabriqués par soufflage, à partir d'une préforme en PET (polyéthylène téréphtalate), le bouchon étant en plastique moulé (tel du PP, polypropylène). Ce peut être le cas ici.

Dans le domaine général, seraient déjà connues des bouteilles comprenant :
- un corps de bouteille pourvu d'un col présentant un pas de vis extérieur et une collerette d'accrochage ayant un diamètre extérieur, le diamètre extérieur du col (juste) en-dessous de la collerette d'accrochage étant inférieur à celui(juste) au-dessus et
- un bouchon comprenant :
   ■ une partie principale intégrant une paroi transversale de bouchage du corps de la bouteille et présentant un pas de vis intérieur coopérant avec le pas de vis extérieur du col, et
   ■ une partie marginale définissant une bague d'inviolabilité liée de façon sécable à la partie principale.

Typiquement les parties principale et marginale ont un même diamètre extérieur maximum, ou bien celui de la partie marginale est supérieur de moins de 1.2 mm à celui de l'essentiel au moins de la partie principale.

Serait également déjà connu un corps de bouteille susceptible de convenir à la bouteille précitée et qui comprend en particulier un corps comprenant un col présentant un pas de vis extérieur adapté pour recevoir extérieurement un bouchon et, vers sa base, une collerette d'accrochage.

Se posent aujourd'hui différents problèmes. Parmi eux, on peut en particulier noter :
- une difficulté qui existe dans certains cas, pour les utilisateurs, à réaliser aisément et/ou confortablement au moins la première ouverture de la bouteille, sans que l'effort d'ouverture soit jugé trop important,
- une difficulté à réduire encore le poids des bouteilles, en particulier en ce qui concerne le poids des corps de ces bouteilles,
- une difficulté à définir des solutions techniques à la fois performantes, industriellement compatibles aux moyens techniques à mettre en oeuvre pour certains cas dans des pays peu industrialisés, et à des coûts de revient faibles (compte tenu du prix de vente limité que peuvent avoir les bouteilles),
- une difficulté à rendre compatible tout ou partie de ce qui précède avec, dans certains cas, le mode habituel de transport des bouteilles non encore remplies qui typiquement sont déplacées par flux d'air, en étant plus ou moins soutenues, sous la collerette d'accrochage, par des doigts porteurs auxquels il faut assurer un minimum de surface de portée avec la paroi inférieure de la collerette,
- une difficulté à rendre compatible plusieurs des aspects précités, telle notamment que la satisfaction d'une difficulté d'ouverture exprimée par l'utilisateur et un coût d'adaptation de l'outil de fabrication qui doit rester faible.

En vue de satisfaire tout ou partie de ces problèmes, il est tout d'abord proposé que le col du corps de bouteille précité présente intérieurement une première section, au niveau du pas de vis extérieur, laquelle section, à l'endroit d'un rétrécissement situé sensiblement au niveau de la collerette d'accrochage, diminue jusqu'à une seconde section, strictement inférieure à la première section.

La « Collerette d'accrochage » sera donc une collerette qui a pour fonction de pouvoir, lors de la manutention de la bouteille en usine, soutenir la bouteille par des doigts porteurs. Généralement cette collerette est la plus inférieure du col.

Selon une caractéristique particulière, la première section (s1) présente un diamètre constant jusqu'au rétrécissement (26") depuis une extrémité libre (29") du col. En outre, préférentiellement, d'une part, l'épaisseur (e) est constante au fond des filets et à l'endroit du rétrécissement et, d'autre part, le diamètre extérieur du col à l'endroit le plus étroit du rétrécissement est compris entre le diamètre de la première section (s1) et le diamètre extérieur (d4") du col juste au dessus de la collerette d'accrochage, dans une gorge où vient se loger une bague d'inviolabilité.

Selon une caractéristique avantageuse, ledit diamètre extérieur du col au-dessus de la collerette d'accrochage est un diamètre situé entre cette collerette d'accrochage et une collerette d'inviolabilité au-dessus de laquelle le col présente ledit pas de vis extérieur.

Selon d'autres caractéristiques particulières, les première et seconde sections se raccordent par une pente oblique. De plus, la collerette d'accrochage présente une paroi supérieure orientée vers l'extrémité libre du col et une paroi inférieure opposée et le rétrécissement présente une pente oblique qui, à l'intérieur du col, s'étend sensiblement entre les niveaux desdites parois respectivement supérieure et inférieure de la collerette d'accrochage.

Avantageusement, la collerette d'accrochage présente une paroi supérieure orientée vers l'extrémité libre du col et une paroi inférieure opposée qui présente une largeur comprise entre 0,8 mm et 1,5 mm, en particulier inférieure ou égale à 1,30 mm.

En outre, il est proposé que le diamètre extérieur de la collerette d'accrochage soit :
- supérieur de moins de 0,3 mm audit diamètre extérieur maximum de la/des dites partie(s) concernée(s) du bouchon,
- ou bien inférieur ou égal à ce diamètre extérieur maximum.

Ainsi, même s'il y a une légère saillie de la collerette d'accrochage juste sous le bouchon vissé, les doigts de l'utilisateur n'auront pas tendance à notablement serrer davantage une partie fixe (la collerette d'accrochage) que la partie mobile que cet utilisateur veut tourner (le bouchon). En outre, les caractéristiques ci-dessus demeurent compatibles, sur les corps de bouteille existants, avec une modification limitée de l'outil industriel. A noter également que les bouchons concernés ne sont ici pas ceux dans lesquels le diamètre extérieur (maximum) de la bague d'inviolabilité est « notablement saillant » par rapport à la partie principale (la plus haute) du bouchon que l'utilisateur a essentiellement en main, notamment lors de la première ouverture de la bouteille, lorsque les liens sécables entre cette partie principale et la bague d'inviolabilité n'ont pas encore été rompus par l'utilisateur.

On va ainsi pouvoir reporter à l'intérieur du corps de la bouteille et/ou sous la collerette d'accrochage la recherche d'une surface d'appui « suffisante » du corps de bouteille sur ces supports, pour son déplacement vers son lieu de remplissage, puis de bouchage. Ceci doit également permettre des coûts d'investissement machines/matériels limités.

On notera encore que les différentes améliorations proposées ci-avant concourent à permettre de limiter la quantité de matière des corps de bouteille et leur poids, ceci ayant un impact en termes de coûts, de limitation des déchets, voire de rapidité d'embouteillage (cadence de transport...).

D'autres caractéristiques et avantages de l'invention apparaîtront encore dans la description qui suit, faite en référence aux dessins annexés donnés uniquement à titre d'exemples non limitatifs et où :
- la figure 1 montre un exemple de l'art antérieur,
- les figures 2 et 3 montrent une solution conforme à l'invention,
- les figures 4 et 7 montrent respectivement un bouchon, en coupe, qui peut être celui des figures 1 à 3, et une vue agrandie d'un autre bouchon, moitié en coupe,
- la figure 5 est une vue agrandie d'un col de corps de bouteille conforme à l'invention qui peut aussi être celui des figures 1 à 3,
- la figure 6 est une vue agrandie en coupe d'un col de corps de bouteille selon un autre mode de réalisation de l'invention, et
- la figure 8 montre une vue complète d'un corps de bouteille conforme à l'invention.

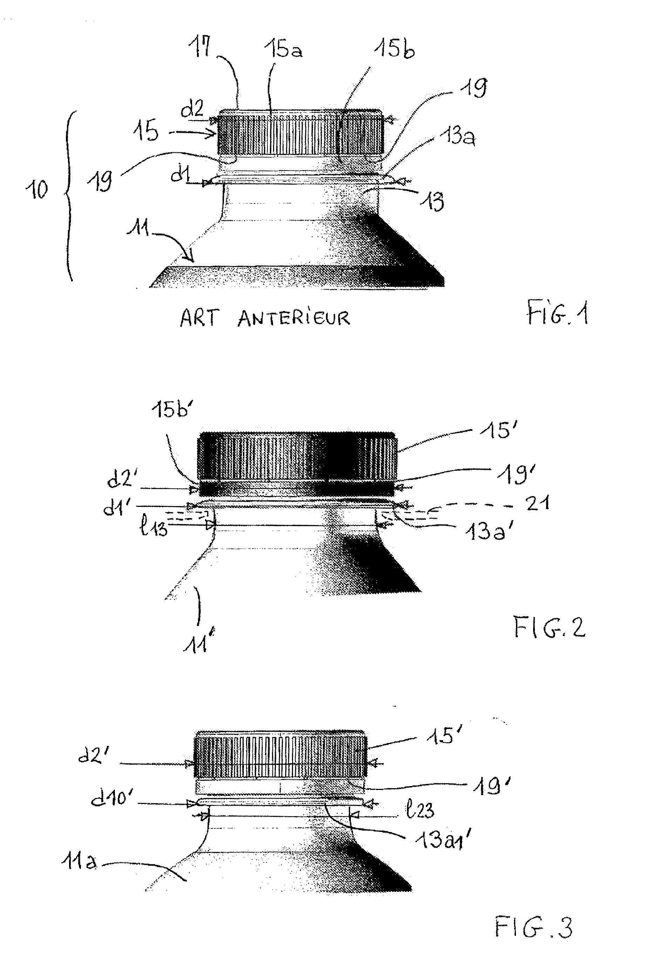

Figure 1, on voit la partie supérieure 10 d'une bouteille plastique de l'art antérieur. Elle comprend un corps 11 de bouteille et un bouchon 15, tous deux en plastique alimentaire.

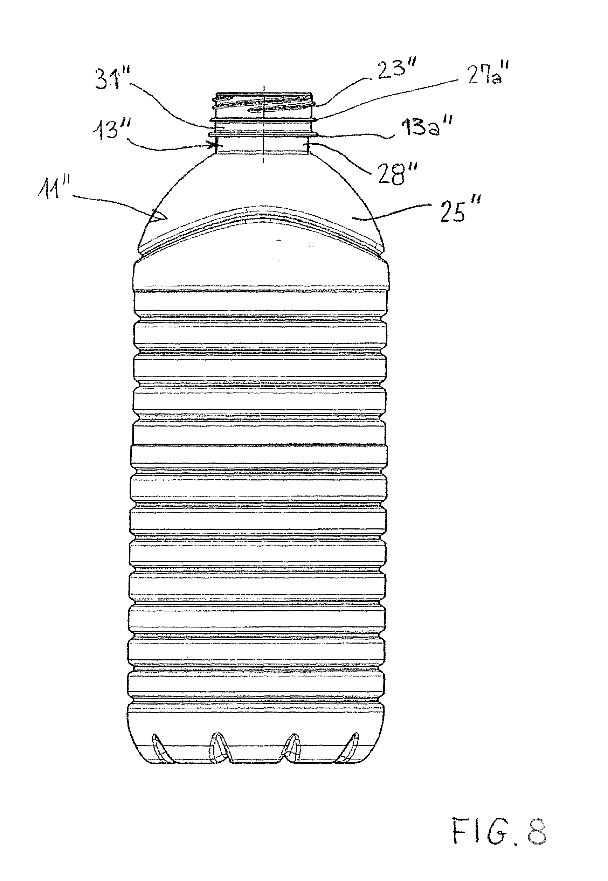

Le corps 11 est pourvu d'un col, ou goulot, 13 présentant un pas de vis extérieur et une collerette d'accrochage 13a ayant un diamètre extérieur d1. Immédiatement sous le col la bouteille s'élargit largement au-delà du diamètre extérieur du col (voir figure 8 notamment)

Sur ce col est extérieurement vissé le bouchon 15 qui comprend une partie principale 15a et une partie marginale 15b.

La partie principale 15a intègre une paroi transversale 17 de bouchage du corps 11 et présente un pas de vis intérieur coopérant avec le pas de vis extérieur du col.

La partie marginale 15b définit une bague d'inviolabilité, ou témoin d'ouverture. Elle est liée de façon sécable à la partie principale 15a, par des ponts de matière 19.

Les parties principale et marginale 15a, 15b ont ici un même diamètre extérieur maximum d2.

On remarque que d1 > d2. Et d1-d2= 0,6mm. Ceci pose problème, comme déjà évoqué.

Conformément à l'invention, les figures 2, 3 proposent des solutions où les mêmes repères que ceux ci-dessus sont utilisés pour désigner les mêmes éléments, avec un exposant « ' » pour différencier.

Figure 2, on voit ainsi que le diamètre extérieur d1' de la collerette d'accrochage 13a' est supérieur de moins de 0,3 mm au diamètre extérieur maximum d2' du bouchon 15'.

Figure 3, le diamètre extérieur d10' de la collerette d'accrochage 13a1' est inférieur au même diamètre extérieur maximum d2' du bouchon 15'. Ces diamètres pourraient être égaux.

Sur ces figures, les ponts de matière 19' n'ont pas encore été rompus.

Ainsi un serrage du bouchon pour le dévisser, en particulier en première ouverture, ne va pas être perturbé par la saillie que représentait figure 1 la collerette d'accrochage 13a.

Pour autant, il reste toujours figures 2, 3 une largeur suffisante, respectivement 113, 123, sous la collerette d'accrochage 13a', 13a1', pour notamment supporter le corps de bouteille lors de son transport en phase d'embouteillage (typiquement lorsqu'un transporteur placé sous flux d'air déplace par « trains » des groupes de tels corps encore vides, juste supportés par des doigts périphériques tels 21 figure 2).

Etant donné que lesdites collerettes d'accrochage 13a', 13a1' sont de moins grand diamètre extérieur que celle de la figure 1, on obtiendra en outre un gain de poids, sans que la rigidité du corps 11', 11a soit affectée.

Comme on verra plus loin, différents types de bouchons sont concernés ; voir en particulier figures 2-4, 7.

A ce sujet, on conseille globalement l'utilisation de bouchons, respectivement 15', 15" , présentant une hauteur totale H inférieure à 12 mm.

On entend par « hauteur totale H », toute la hauteur du bouchon considéré, ici la hauteur cumulée des parties principale et marginale du bouchon présenté, puisqu'on a illustré des bouchons ayant deux telles parties.

Limiter cette hauteur à 12 mm, et moins, importe dans la mesure où la hauteur sur laquelle les doigts de l'utilisateur peuvent serrer dans les conditions précitées est alors d'autant plus limitée et donc l'effet gênant de la saillie qui existait jusqu'alors d'autant plus important.

Par ailleurs, combiner la réduction de diamètre de la collerette d'accrochage (sans augmentation de son épaisseur) et limiter la hauteur du bouchon augmente encore le gain de poids.

Dans ce sens, on invite même de préférence, s'il doit y avoir légère saillie de la collerette d'accrochage, telle 13a' figure 2, par rapport au diamètre maximum du bouchon (partie 15b' sur cette figure) que ce diamètre extérieur d1' de la collerette d'accrochage soit supérieur de moins de 0,25 mm, et de préférence moins de 0,20mm, audit diamètre maximum d2' du bouchon. Au vu des tests menés, ceci parait être la limite de sensation par les doigts de la surépaisseur génératrice de « l'effet bloquant » évoqué plus haut gênant pour certains utilisateurs, tout en permettant de maintenir la sécurité de première ouverture conditionnée, dans les exemples, par la présence de la bague 15b', 15b" (figures 2-4, 7).

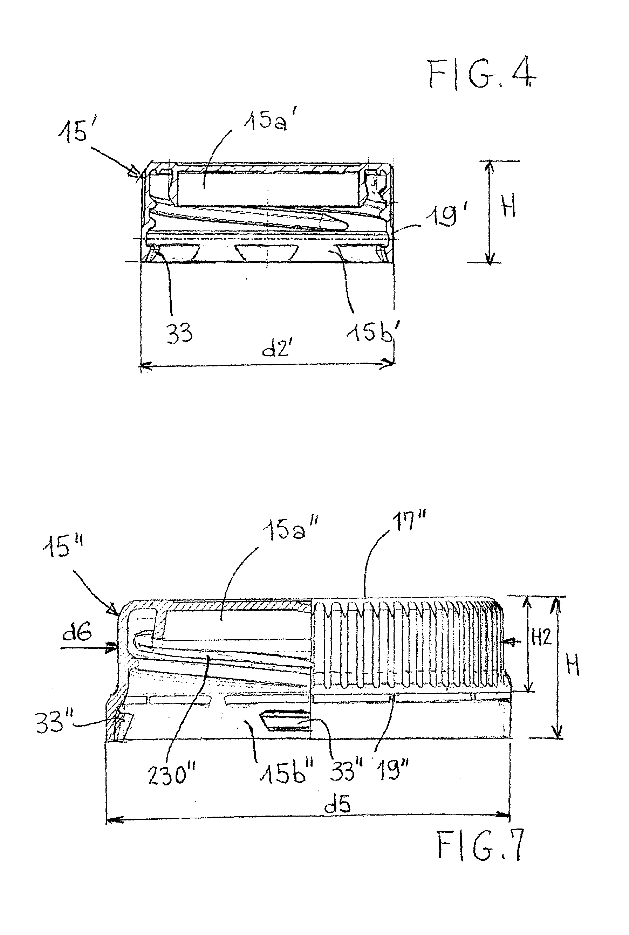

Concernant le bouchon des figures 2, 3, 4, on voit plus nettement figure 4 qu'il présente un diamètre extérieur maximum d2' constant sur toute sa hauteur H.

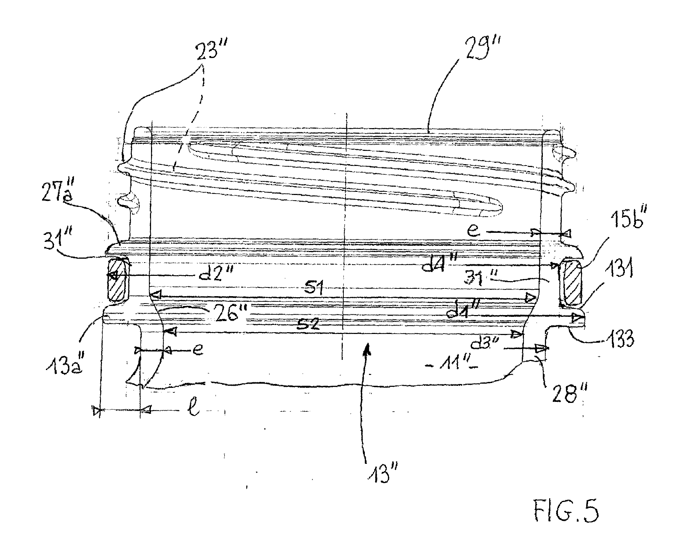

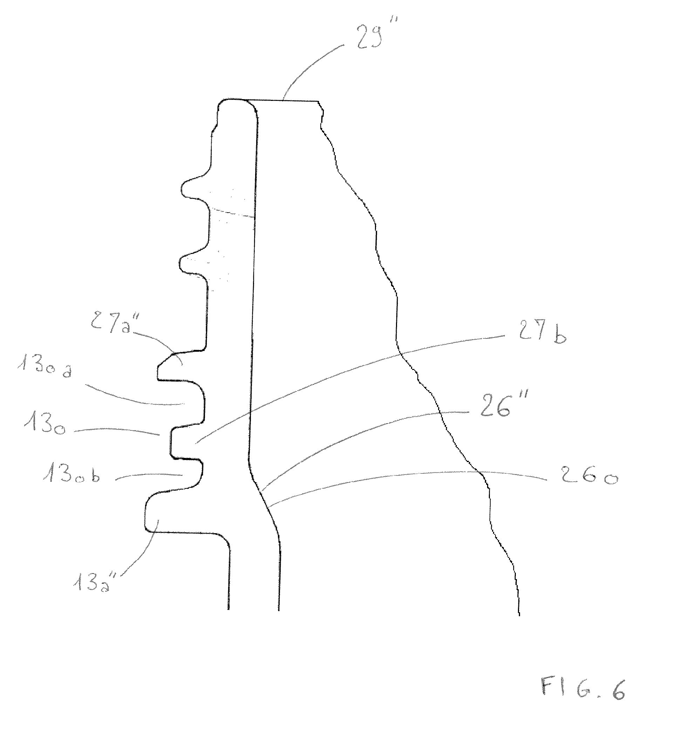

Figure 8 et surtout sur les agrandissements des figures 5 et 6, on distingue nettement un corps de bouteille 11" conforme à l'invention qui peut (mais pas uniquement ou nécessairement) être utilisé comme corps d'une des bouteilles des figures 2, 3 ou en liaison avec l'un des bouchons de ces figures ou des figures 4, 7.

Ce corps comprend toujours un col, ici 13", présentant un pas de vis extérieur 23" adapté à recevoir extérieurement un bouchon. Vers sa base, à proximité donc de la partie inférieure renflée 25" du corps, ce col intègre la collerette (extérieure) d'accrochage 13a".

Conformément à un aspect important de l'invention, ce corps est en outre tel que :
- le col 13" présente intérieurement une section s1 qui diminue jusqu'à s2, à l'endroit d'un rétrécissement 26" situé sensiblement au niveau de la collerette d'accrochage 13a",
- et/ou le diamètre extérieur d3" du col en-dessous de la collerette d'accrochage (zone 28") est inférieur à celui d4" au-dessus (zone 31").

Ceci se voit figures 5, 6 et 8.

La pente de raccordement 260 avec la section s1 est oblique et orientée vers l'intérieur de la bouteille à mesure qu'on s'éloigne de l'extrémité libre 29".

On remarquera aussi que l'épaisseur e du col sur toute sa hauteur sera de préférence constante aux endroits où il n'y a pas de surépaisseur due aux filets 23" ou aux collerettes 13a", 27a" .

Concernant la collerette 27a", il s'agit ici d'une collerette (extérieure) d'inviolabilité au-dessus de laquelle le col présente le filetage extérieur 23", pour le vissage du bouchon concerné.

Si une telle collerette d'inviolabilité est prévue, le bouchon présentera alors une bague d'inviolabilité, telle 15b'ou 15b" (figures 4, 8).

De façon connue, une fois le bouchon ouvert pour la première fois, et donc les ponts de matière 19',19" rompus, la bague d'inviolabilité doit demeurer dans la gorge 130 c'est-à-dire dans la gorge définie entre les collerettes d'inviolabilité et d'accrochage (voir figures 5 et 6, gorge 130 et bague 15b").

Figures 2, 3 et plus nettement figure 5, on voit en outre que le diamètre extérieur du col (d4" fig.5) au-dessus de la collerette d'accrochage est un diamètre situé entre cette collerette d'accrochage et la collerette d'inviolabilité (zone 31" de réception/retenue de la bague d'inviolabilité du bouchon).

Au-dessus, c'est-à-dire en direction de l'extrémité libre (repérée 29" figures 5 et 6) du col, ce dernier présente un/le filetage extérieur 23" pour le vissage du bouchon qui convient.

A nouveau plus nettement figures 5 et 6, on voit aussi qu' à l'endroit du rétrécissement 26" , le diamètre intérieur de ce col diminue à mesure qu'on s'éloigne de l'extrémité libre 29" .

Dans l'exemple préféré, cette diminution prend la forme d'un tronc de cône.

On remarquera aussi que la collerette d'accrochage, telle 13a", présente une paroi supérieure 131 orientée vers l'extrémité libre 29" du col et une paroi inférieure opposée 133. Et le rétrécissement 26" présente une pente qui, à l'intérieur du col, s'étend sensiblement entre les niveaux desdites parois respectivement supérieure et inférieure de cette collerette 13a".

Ceci est avantageux car on peut conserver sensiblement l'épaisseur de paroi e, favoriser une largeur d'appui 1 (largeur de la paroi inférieure 133) adapté aux soutiens 21, tout en absorbant la diminution de diamètre en d1".

Figure 5, le rétrécissement 26" s'étend même, d'une façon favorable, entre un niveau situé à peine au-dessus de la paroi supérieure 131 et un niveau situé à peine en-dessous de ou en alignement avec la paroi inférieure 133.

Ceci est d'autant plus favorable à ce que l'épaisseur e demeure constante.

Avec le rétrécissement 26" on favorise donc des largeurs 1 bénéfiques notamment aux transports d'embouteillage. A cet égard, les essais menés conduisent à conseiller que la paroi inférieure 133 présente une largeur 1 comprise entre 0,8 mm et 1,5 mm.

Une telle largeur inférieure ou égale à 1,30 mm (favorablement entre 0,9 mm et 1,30 mm) doit être optimum pour concilier les exigences quasi contradictoires précitées : confort de première ouverture, réduction de poids, solution efficace à coût faible, non perturbation du mode habituel de transport des bouteilles (tel par transporteur sous flux d'air et soutien sous la collerette d'accrochage).

Figure 6, on voit une vue agrandie en coupe d'un col de corps de bouteille selon un autre mode de réalisation que celui présenté figure 5. En effet, il a été rajouté une collerette intermédiaire 27b" située entre les collerettes 13a" et 27a", respectivement la collerette d'accrochage et collerette d'inviolabilité au-dessus de laquelle le col présente le filetage extérieur 23" . Une gorge 130 apte à accueillir la bague d'inviolabilité est donc constituée de deux demi gorges 130a et 130b, la collerette intermédiaire 27b" étant recouverte par la bague d'inviolabilité avant une première ouverture.

Figure 7, on voit un autre exemple de bouchon 15" pouvant être utilisé en combinaison avec un col de corps de bouteille où (comme par exemple illustré figure 5):
- le col présente intérieurement une section qui diminue à l'endroit d'un rétrécissement (26") situé sensiblement au niveau de la collerette extérieur d'accrochage,
- et/ou où le diamètre extérieur du col en-dessous de cette collerette d'accrochage (en 28") est inférieur à celui situé au-dessus (en 31").

Ce bouchon 15" de la figure 7 présente à nouveau une partie principale 15a" et la partie marginale 15b".

La partie principale 15a" intègre une paroi transversale (de fond) 17" de bouchage du corps sur lequel elle sera vissée et présente un pas de vis intérieur 230" prévu pour coopérer avec le pas de vis extérieur de ce col. La partie marginale 15b" définit une bague d'inviolabilité, ou témoin d'ouverture. Elle est liée de façon sécable à la partie principale 15a, par les ponts 19".

Une différence avec le bouchon 15' réside dans le fait que la partie marginale 15b" présente un diamètre extérieur d5 supérieur au diamètre extérieur d6 de la partie principale 15a" sur l'essentiel au moins de la hauteur H2 de cette dernière.

Ainsi, même avec de tels bouchons de plus grand diamètre à leur base (ouverte) qu'à leur sommet fermé (paroi 17"), il sera possible d'utiliser un corps de bouteille comme celui figure 5.

On comprend qu'une fois la première ouverture du bouchon réalisée, la partie marginale 15b" sera à la place de l'élément 15b' illustré figure 5.

A priori, une caractéristique qui pourra différencier les (types de) bouchons 15' et 15" est que :
- le (type de) bouchon 15' présente une bague d'inviolabilité à ergots internes 33 (figure 4) qui frottent contre la surface extérieure de la zone extérieure 31" du col (figure 5),
- tandis que la bague d'inviolabilité du (type de) bouchon 15" présente des becs de verrouillage différents 33" (figure 7).

A noter encore figure 7 que le diamètre extérieur maximum d5 de la partie marginale 15b" est supérieur de moins de 1.2 mm à celui d6 de la partie principale, sur l'essentiel au moins de sa hauteur. Ceci concourt à la satisfaction d'une partie notable des problèmes évoqués en début de texte, dans les compromis recherchés.

## Revendications

1. Corps de bouteille (11', 11") comprenant un col (13") présentant, extérieurement, un pas de vis extérieur (23") adapté pour recevoir un bouchon (15',15") et, vers sa base, une collerette d'accrochage (13a',13a1',13"), le diamètre extérieur du col en-dessous (d3") de la collerette d'accrochage étant inférieur à celui au dessus (d4"), **caractérisé en ce que** le col présente intérieurement, au niveau du pas de vis extérieur, une première section (s1) qui diminue, à l'endroit d'un rétrécissement (26") situé sensiblement au niveau de la collerette d'accrochage, jusqu'à une seconde section (S2) inférieure à la première section (S1).

2. Corps selon la revendication 1, **caractérisé en ce que** la première section (s1) présente un diamètre constant jusqu'au rétrécissement (26") depuis une extrémité libre (29") du col.

3. Corps selon l'une quelconque des revendications 1 et 2 **caractérisé en ce que** le corps présente une épaisseur (e) qui est constante au fond des filets et à l'endroit du rétrécissement

4. Corps selon l'une quelconque des revendications 1 à 3 **caractérisé en ce que** le diamètre extérieur du col à l'endroit le plus étroit du rétrécissement est compris entre le diamètre de la première section (s1) et le diamètre extérieur (d4") du col juste au dessus de la collerette d'accrochage, dans une gorge (130) où peut venir se loger une bague d'inviolabilité (15b', 15b").

5. Corps selon l'une quelconque des revendications 1 à 4, **caractérisé en ce que** ledit diamètre extérieur du col au-dessus de la collerette d'accrochage est un diamètre situé entre cette collerette d'accrochage et une collerette d'inviolabilité (27a") au-dessus de laquelle le col présente le pas de vis extérieur (23").

6. Corps selon l'une quelconque des revendications 1 à 5, **caractérisé en ce que** les première et seconde sections se raccordent par une pente oblique (260).

7. Corps selon l'une des revendications 1 à 6, **caractérisé en ce que** la collerette d'accrochage (13a") présente une paroi supérieure (131) orientée vers l'extrémité libre (29") du col et une paroi inférieure (133) opposée et le rétrécissement présente une pente oblique qui, à l'intérieur du col, s'étend sensiblement entre les niveaux desdites parois respectivement supérieure et inférieure de la collerette d'accrochage.

8. Corps selon l'une des revendications 1 à 7, **caractérisé en ce que** la collerette d'accrochage présente une paroi supérieure (131) orientée vers l'extrémité libre du col et une paroi inférieure (133) opposée qui présente une largeur (1) comprise entre 0,8 mm et 1,5 mm.

9. Corps selon la revendication 8, **caractérisé en ce que** la largeur (1) de la paroi inférieure (133) est inférieure ou égale à 1,30 mm.
